# EUROPÄISCHE PATENTSCHRIFT

(11) **EP 1 621 070 B1**
(45) Veröffentlichungstag und Bekanntmachung des Hinweises auf die Patenterteilung: **22.09.2010**
(21) Anmeldenummer: 05014031.8
(22) Anmeldetag: 29.06.2005
(51) Int. Cl.: A01G 9/14

(54) **Thermoplastische Erzeugnisse für Aussenanwendungen im Agrarbereich**
Thermoplastic products for external uses in agriculture
Produits thermoplastiques pour utilisations extérieures en agriculture

(30) Priorität: 29.07.2004 DE 102004037291
(43) Veröffentlichungstag der Anmeldung: 01.02.2006
(73) Patentinhaber: GRAFE Color Batch GmbH, 99444 Blankenhain (DE)
(72) Erfinder: Grafe, Matthias, 99425 Weimar (DE); Grafe, Clemens, 99423 Weimar (DE); Caro, Carlos, Dr., 99425 Weimar (DE); Henkel, Petra, 99510 Apolda (DE)
(74) Vertreter: Oehmke, Volker

(56) Entgegenhaltungen:
- DE-A1- 3 818 986
- FR-A- 2 511 840
- FR-A- 2 846 647
- US-A- 6 153 665
- DATABASE WPI Section Ch, Week 200280 Derwent Publications Ltd., London, GB; Class A89, AN 2002-738857 XP002350874 -& NL 1 017 077 C (ROMASHEV Y) 15. Juli 2002 (2002-07-15)

## Beschreibung

Die Erfindung betrifft die Additivierung von thermoplastischen Erzeugnissen für Außenanwendungen, speziell solche als Bedachungen und Abdeckungen von Strukturen und Bauten im Agrarbereich, wie z.B. Folien, Netze, Platten etc, in Form von Kunststoffkonzentraten. Diese Erzeugnisse können insbesondere als wachstumsbegünstigende, qualitätsverbessernde und schützende Überzüge für Anpflanzungen verwendet werden.

Die besondere Rolle von Licht beim Pflanzenwachstum ist bereits bekannt. Neben der Lichtintensität spielen auch eine Rolle die Dauer der Lichteinstrahlung, ihre Richtung und ihre spektrale Zusammensetzung. Alle diese Faktoren können die Photomorphogenesis der Pflanze beeinflussen. Speziell das rote Licht und das NIR scheinen einen großen Einfluss auf Physiologie und Morphologie der Pflanzen auszuüben. Daraus wurde die Idee entwickelt, durch die Verwendung von künstlichem Licht das Wachstum von Pflanzen optimal zu steuern. Durch kommerzielle und technische Nachteile dieser Methoden wurden weitere Versuche durchgeführt, um diesmal Substanzen in das Bedachungsmaterial zu integrieren, die in der Lage sind, die Art und Menge des Lichtes zu modifizieren. Dies war der Anfang vom Begriff der "Photoselektivität".

Die Art und Menge der natürlichen Einstrahlung auf eine Pflanze innerhalb einer Konstruktion wird durch die Eigenschaften des Bedachungsmaterials vordergründig beeinflusst. Ein Teil des Lichtes kann absorbiert, ein anderer Teil kann reflektiert werden, wiederum ein anderer Teil kann mit oder ohne Verluste durchgelassen werden und somit die Pflanzen erreichen. Ganz allgemein, alle Bedachungsmaterialien für Agrarstrukturen, z.B. Gewächshausfolien, die einen photoselektiven Effekt aufweisen, beeinflussen die Morphologie und Physiologie der Pflanzen. Durch die Art und Menge von speziellen Substanzen in den Bedachungsmaterialien kann die Photoselektivität sowohl positiv als auch negativ für die Pflanze modifiziert werden.

Photoselektivität kann durch verschiedene physikalische Vorgänge erreicht werden:
- Absorption
- Reflektion
- Fluoreszenz
- Interferenz
- Photochromie / Thermochromie / Elektrochromie

Für die bessere Erklärung der hier angemeldeten Erfindung soll der Effekt der Fluoreszenz näher erörtert werden.
Lumineszenz ist der allgemeine, umfassende Begriff. Es ist die optische Strahlung eines physikalischen Systems, die beim Übergang von einem angeregten Zustand zum Grundzustand entsteht. Je nach Art der Anregung unterscheidet man verschiedene Arten der Lumineszenz:
Elektrolumineszenz,
Kathodolumineszenz,
Photolumineszenz,
Chemolumineszenz und
Biolumineszenz.

Bei der Photolumineszenz erfolgt die Anregung des Systems durch Photonen. Man unterscheidet nach der Zeitspanne zwischen Start der Anregung und Emission des Lichtes zwischen Phosphoreszenz und Fluoreszenz.
Die verschiedenen Arten der Lumineszenz können auch nach der Dauer des Leuchtens nach der Anregung eingeteilt werden. Ein Nachleuchten als unmittelbare Folge und Begleiterscheinung der Anregung bezeichnet man als Fluoreszenz, hingegen spricht man von Phosphoreszenz, wenn ein Nachleuchten von wenigstens 1/1000 Sekunde nach der Anregung erfolgt.
Mit anderen Worten versteht man unter Phosphoreszenz die physikalische Erscheinung, dass ein Stoff oder eine Substanz nach kurzer Energiezufuhr nachleuchtet. Bei der Fluoreszenz leuchtet die Substanz nur, solange Energie zugeführt wird.
Leuchten können feste, flüssige oder gasförmige Substanzen erzeugen. Die Energie, die zugeführt wird, regt Elektronen im Molekül an, die exakt beim Übergang in energieärmere Niveaus die überschüssig Energie in Form von Lichtquanten (Photonen) abgeben. Dies erzeugt das charakteristische Leuchten. Nach dem Gesetz von Stokes wird immer eine Emission von Licht in höheren Wellenlängenbereichen erfolgen, als die vorhergehende Absorption.

Eine Substanz, die zur Fluoreszenz neigt, wird Energie aus den verschiedenen Bereichen des UV- und des sichtbaren Bereiches des Lichtspektrums absorbieren, um Licht höherer Wellenlänge zu emittieren. Wird diese Substanz z.B. in eine Gewächshausfolie eingearbeitet, dann wird sie Energie aus der globalen einfallenden Strahlung entnehmen. Durch die Art des Folienmaterials, eines möglichen mehrschichtigen Folienaufbaus sowie die Art und Konzentration der Fluoreszenzsubstanz, in der Regel auch Fluoreszenzpigmente genannt, kann im Endprodukt das emittierende Licht zugunsten der Pflanze genutzt werden.
Bereits auf dem Markt sind Additive für Agrarfolien käuflich, die in der Lage sind, W-Licht zu absorbieren und dafür rotes Licht zu emittieren. Diese Folien werden durch die Eigenschaften der dafür verwendeten Pigmente durch das menschliche Auge rot wahrgenommen. Da diese Substanzen auch Licht im sichtbaren Bereich absorbieren, haben sie den Nachteil, dass sie eindeutig die Photoaktive Strahlung (PAR), die die wichtigste Einflussgröße für das Pflanzenwachstum ist, verringern. Ihr Ziel ist es jedoch, das Hellrot/Dunkelrot-Verhältnis zugunsten von mehr hellroter Farbe im Gewächshaus zu modifizieren, so dass Pflanzen, speziell Rosen, im Sinne von Ertrag und Menge schneller wachsen können.
Zahlreiche Veröffentlichungen zeigten die unterschiedlichen Effekte beim Anbau von verschiedenen Obst-, Gemüse und Blumenpflanzen, wenn man die dafür benötigten Gewächshausfolien mit Substanzen verstärkt, wie sie beispielsweise mit der US 6,153,665 A oder der FR 2 846 647 A offenbart wurden, die ausschließlich rotes bzw. rot/oranges Licht emittieren.

Untersuchungen haben gezeigt, dass viele Fluoreszenzpigmente, die im sichtbaren Bereich Licht absorbieren und eine rot/orange Farbe im Endprodukt verursachen, keine Langzeitstabilität gegenüber Umwelteinflüssen (Sonnenlicht, UV-Licht, Feuchtigkeit) haben und somit abbauen. Diesen Nachteil kann man bis zu einem gewissen Grad ausgleichen, indem man die Konzentration des Pigments im Endprodukt so hoch wie vertretbar wählt, so dass während der geplanten Nutzungsdauer ein Effekt noch vorhanden ist.
Bei Erzeugnissen, wie z.B. Spritzgussartikel, Folien, Fasern, Klebern und Kunstleder, die äußeren Umwelteinflüssen nicht ausgesetzt sind, werden Fluoreszenzpigmente als optische Aufheller verwendet. In der Fachliteratur werden die Begriffe "Optical Brightener" und "Fluorescent Whitening Agent", abgekürzt FWA verwendet. Man verwendet diese Substanzen um:
- Farbechtheiten zu erhöhen,
- Ursprungsfarben zu verbessern,
- Brillanz von gefärbten Artikeln zu erreichen,
- Vergilbung von Plastikmaterialien abzudecken.

Der Effekt eines derartigen Materials liegt in der Aufnahme von UV-Licht und die Emission von blauem Licht einer bestimmten Wellenlänge. Der chemische Ursprung aller dieser Fluoreszenzpigmente ist organisch.
Mit der NL 1 017 077 C wird ein Bedachungsmaterial aus Kunststoff vorgestellt, welches immer eine Kombination von verschiedenen Fluoreszenzpigmenten als optische Aufheller enthält.
Außenanwendungen mit diesen Produkten, z.B. als Additiv für Gewächshausfolien, können durch die fehlende Witterungsbeständigkeit und zum Teil Migrationseffekte aus der Polymermatrix, nicht bestritten werden (DE 38 18 986 A1).

Der Erfindung liegt die Aufgabe zugrunde, thermoplastische Erzeugnisse für Außenanwendungen im Agrarbereich zur Verbesserung der Photosynthese chlorophyllhaltiger Zellen anzugeben, die das UV-Licht absorbieren, um Licht im blauen Bereich des Lichtspektrums zu emittieren und einen Langzeiteinsatz für die Außenanwendung ermöglichen.
Die Aufgabe der Erfindung wird für thermoplastische Erzeugnisse für Außenanwendungen im Agrarbereich mit den Merkmalen des Anspruches 1 gelöst.

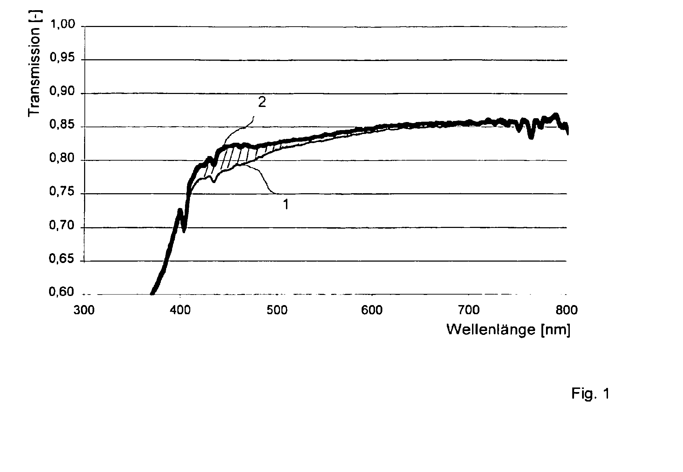

Die Erfindung soll nachfolgend anhand von Ausführungsbeispielen näher erläutert werden. Die Zeichnung zeigt in
- Fig. 1: die gemessenen Transmissionsverläufe unter einer erfindungsgemäßen Folie und einer herkömmlichen Folie.

### Beispiel Nr. 1

Compound, nötig für die Herstellung einer Standardfolie (Monoschicht), ohne Fluoreszenzpigment.

| | |
|---|---|
| Antifog | 0,56 % |
| IR-Absorber | 4,00 % |
| Light Diffuser | 1,50 % |
| UV-Stabilisator | 1,20 % |
| Antioxydantien | 0,20 % |
| Polymerträger | 92,54 % |

### Beispiel Nr. 2

Compound, nötig für die Herstellung einer Folie, gemäß Anspruch 1, bestehend aus einer Monoschicht.

| | |
|---|---|
| Fluoreszenzpigment | 0,30 % |
| Antifog | 0,56 % |
| IR-Absorber | 4,00 % |
| Light Diffuser | 1,50 % |
| UV-Stabilisator | 1,20 % |
| Antioxydantien | 0,20 % |
| Polymerträger | 92,24 % |

### Beispiel Nr. 3

Masterbatch (Konzentrat), nötig für die Herstellung einer Folie, gemäß Anspruch 1.

| | |
|---|---|
| Fluoreszenzpigment | 4,00 % |
| UV Stabilisator | 16,00 % |
| Polymerträger | 80,00 % |

### Beispiel Nr. 4

Dabei kann das Produkt im Beispiel Nr. 3 mit einer bestimmten Dosierung verwendet werden, für den Fall, dass ein mehrschichtiger Folienaufbau technisch notwendig ist. Das Beispiel bezieht sich auf eine Folie mit einer Dicke von 200 Mikrometern, bestehend aus 3-Schichten in den Dickenverhältnissen 50-100-50.

| Schicht Nr. 1 (Außen) | |
|---|---|
| Additiv | Dosierung |
| Beispiel Nr. 3 | 7,5 % |
| IR Absorber | 5 % |
| Light diffuser | 7,5 % |
| Polymerträger | 80 % |

| Schicht Nr. 2 (Mittel) | |
|---|---|
| Additiv | Dosierung |
| Beispiel Nr. 3 | 7,5 % |
| Antifog | 15 % |
| IR Absorber | 5 % |
| Light diffuser | 7,5 % |
| Polymerträger | 75 % |

| Schicht Nr. 3 (Innen, dem Pflanzgut nächstliegend) | |
|---|---|
| Additiv | Dosierung |
| Beispiel Nr. 3 | 7,5 % |
| Antifog | 7 % |
| IR Absorber | 5 % |
| Light diffuser | 7,5 % |
| Polymerträger | 73 % |

Das in Fig. 1 dargestellte Diagramm zeigt die spektrale Lichttransmission von zwei unterschiedlichen Gewächshausfolien entlang des sichtbaren Spektralbereichs des Lichtes.
Die erste Kurve 1 betrifft die Messkurve unter einer Standardfolie wie im Beispiel Nr. 1, jedoch ohne ein Fluoreszenzpigment. Die zweite Kurve 2 betrifft die Messkurve unter einer erfindungsgemäßen Folie entsprechend dem Beispiel Nr. 4. Man kann sehen, dass die Anwesenheit eines blaues Licht emittierenden Fluoreszenzpigments ab einer Wellenlänge von 400 nm eine Zunahme der relevante Transmissionsgrößen deutlich bewirkt. Die gestrichelte Fläche zwischen beiden Kurven gemäß Fig. 1 soll die Menge an zusätzlichem Licht verdeutlichen, die der Pflanze durch die erhöhte PAR-Transmission zur Verfügung steht.

Neu an der Erfindung ist nicht nur die Anwendung von blaues Licht emittierenden Fluoreszenzpigmenten als Additiv für Landwirtschaftsfolien, sondern der dadurch erzielte Effekt auf das Pflanzenwachstum und Pflanzenqualität speziell bei Erdbeeren und Blumen, bedingt durch die Wirkung vom zusätzlichen Licht innerhalb des Gewächshauses. Es wurde festgestellt, dass den Pflanzen innerhalb eines Gewächshauses, wo eine Folie mit diesem Additiv zur Abdeckung verwendet wurde, in Abhängigkeit der Konzentration im Endprodukt, annähernd die gleiche Lichtmenge zur Verfügung stehen kann, als ob sie außerhalb des Gewächshauses unter freiem Himmel angebaut worden wären. Dies belegten Messungen der PAR-Transmission innerhalb des Gewächshauses und der Lichtmenge außerhalb. So wurden folgende Unterschiede zwischen einer erfindungsgemäßen Gewächshausfolie, entsprechend den Beispielen 2 und 4, und einer Standardfolie, entsprechend dem Beispiel 1, jedoch ohne Fluoreszenzpigmente, festgestellt:
- erhöhte PAR-Transmission
- keine Änderung von Hellrot/Dunkelrot-Verhältnis
- keine Temperaturänderung innerhalb des Gewächshauses
- erhöhte Zahl an Früchten (bei Erdbeerversuchen)
- erhöhte durchschnittliche Blattfläche (bei Erdbeerversuchen)
- Wachstumsbeschleunigung und Ernteverfrühung (bei Blumen)
- Verbesserung der Blumenmorphologie

Die mit diesen Additiven verstärkten Folien werden für Länder empfohlen, wo sehr häufig mit Tagen mit verminderter Sonneneinstrahlung und einer dichten Wolkendecke zu rechnen ist. Solche Klimabedingungen findet man oft in Mittel- und Osteuropa, Skandinavien und Russland.
Mit der Erfindung verfolgt man für diese Länder das Ziel, das verfügbare Licht möglichst zu 100% auszunutzen. Dabei soll verstärkt eine gesteigerte Lichtmenge durch die Anwendung von witterungsbeständigen Substanzen erreicht werden.

Gemäss Anspruch 1 kommen Zusatzstoffe in Frage, die folgendes Eigenschaftsprofil selbst, ohne Stabilisierung und Verstärkung durch weitere Additiven, aufweisen:
- Absorption von UV-Licht und Emission von Licht im blauen Bereich des sichtbaren Spektrums
- keine Absorption im sichtbaren Bereich
- keine Abnahme der PAR-Transmission
- Migrationsbeständigkeit aus der Polymermatrix
- Verträglichkeit mit anderen Zusatzstoffen
- Stabilität gegenüber Sonneneinstrahlung, UV-Licht und Feuchtigkeit

Die gemäß Anspruch 1 angewendete Substanz ist ein anorganisches Pigment, das aus einer 83%igen Mischung von Aluminium- und Bariumderivaten, Magnesiumcarbonat zu 13% und Europiumoxid zu 4% besteht. Diese Mischung verfügt über eine mehr als ausreichende Stabilität gegenüber Temperatureinflüssen durch Produktion und Dauergebrauch im Außenbereich.

Dieses Additiv kann ohne Probleme bei hohen Füllgraden in gängigen thermoplastischen Trägermaterialien verarbeitet werden.
Für den Fall, dass diese Zusatzstoffe in ein Masterbatch (Konzentrat) verarbeitet werden, können die Dosierungen des Masterbatches in das Endprodukt für die angegebenen Konzentrationsgrenzen zwischen 0,01 bis 2,0% ausgewählt werden, in Abhängigkeit der Pflanzenarten, des Folientyps, der Foliendicke, der Anwesenheit von anderen Additiven, gewünschter Wirkung, Lichtverhältnisse etc.

## Patentansprüche

1. Thermoplastische Erzeugnisse für Außenanwendungen im Agrarbereich zur Verbesserung der Photosyntheserate chlorophyllhaltiger Zellen, wobei die thermoplastischen Erzeugnisse änorganische Zusatzstoffe in einem Konzentrationsbereich zwischen 0,01% und 2% enthalten, die nach Absorption von Energie, Licht im blauen Bereich des sichtbaren Spektrums emittieren, **dadurch gekennzeichnet,**
**dass** die anorganischen Zusatzstoffe aus einer Mischung von Aluminium- und Bariumderivaten zu 83%, aus Magnesiumcarbonat zu 13% und aus Europiumoxid zu 4% bestehen.

2. Thermoplastische Erzeugnisse nach Anspruch 1, **dadurch gekennzeichnet, dass** die Zusatzstoffe als optischer Aufheller aktiv werden.

3. Thermoplastische Erzeugnisse nach Anspruch 1 oder 2, **dadurch gekennzeichnet,**
**dass** die thermoplastischen Erzeugnisse als Bedachungsmaterialien und sonstige Abdeckungen von Strukturen im Agrarbereich ausgestaltet sind.

4. Thermoplastische Erzeugnisse nach Anspruch 3, **dadurch gekennzeichnet,**
**dass** die Bedachungsmaterialien aus einer oder mehreren Schichten besteht.

5. Thermoplastische Erzeugnisse nach einem der Ansprüche 1 bis 4, **dadurch gekennzeichnet,**
**dass** den Zusatzstoffen andere Standardadditive wie zum Beispiel Antifog (Anti-Tau), UV-Stabilisatoren, UV Absorber, mineralische Füllstoffe, Light Diffuser beigemischt werden.

6. Thermoplastische Erzeugnisse nach Anspruch 1, **dadurch gekennzeichnet, dass** die Zusatzstoffe in Form eines Compound- oder Masterbatch-Granulats aufbereitet und zur Herstellung der thermoplastischen Erzeugnisse verwendet werden.

## Claims

1. Thermoplastic products to be used outside in agriculture in order to improve the rate of photosynthesis of chlorophyll-containing cells, said thermoplastic products containing inorganic additives in a concentration range between 0.01% and 2%, which additives emit light in the blue range of the visible spectrum after absorption of energy,
**characterised in that**
said inorganic additives consist of a mixture of 83% aluminium derivatives and barium derivatives, 13% magnesium carbonate and 4% europium oxide.

2. Thermoplastic products according to claim 1, **characterised in that** said additives act as optical brighteners.

3. Thermoplastic products according to claim 1 or 2, **characterised in that** said thermoplastic products are in the form of roofing materials and other covers for agricultural structures.

4. Thermoplastic products according to claim 3, **characterised in that** said roofing materials consist of one or more layers.

5. Thermoplastic products according to any one of claims 1 to 4, **characterised in that** other standard additives, such as e.g. anti-fogging agents (anti-dewing agents), UV stabilisers, UV absorbents, mineral fillers, or light diffusers, are admixed to said additives.

6. Thermoplastic products according to claim 1, **characterised in that** said additives are prepared in the form of compound or master batch granules and are used to produce said thermoplastic products.

## Revendications

1. Produits thermoplastiques pour utilisation extérieure en agriculture afin d'améliorer le taux de photosynthèse de cellules contenant de la chlorophylle, lesdits produits thermoplastiques contenant des additifs inorganiques à une concentration compris entre 0,01% et 2%, lesdits additifs émettant après absorption d'énergie de la lumière dans la gamme bleue du spectre visible,
**caractérisés en ce que**
lesdits additifs inorganiques sont constitués d'un mélange de 83% de dérivés d'aluminium et de barium, 13% de carbonate de magnésium et 4% d'oxyde d'europium.

2. Produits thermoplastiques selon la revendication 1, **caractérisés en ce que** lesdits additifs deviennent actifs comme azurants optiques.

3. Produits thermoplastiques selon la revendication 1 ou 2, **caractérisés en ce que** lesdits produits thermoplastiques se présentent sous forme de matériaux de toiture et d'autres couvertures de structures en agriculture.

4. Produits thermoplastiques selon la revendication 3, **caractérisés en ce que** lesdits matériaux de toiture sont réalisés en monocouche ou multicouche.

5. Produits thermoplastiques selon l'une quelconque des revendications 1 à 4, **caractérisés en ce que** l'ont ajout auxdits additifs d'autres additifs standard, comme par exemple les agents anti-buée (anti-rosée), les stabilisateurs UV, les absorbants UV, les fillers minéraux, ou les diffuseurs de lumière.

6. Produits thermoplastiques selon la revendication 1, **caractérisés en ce que** lesdits additifs sont préparés sous forme d'un composée ou mélange-maître granulaires et sont utilisés dans la production desdits produits thermoplastiques.
